Europäisches Patentamt

European Patent Office

Office européen des brevets

(11) Publication number:
**0 331 479**
**A1**

## (12) EUROPEAN PATENT APPLICATION

(21) Application number: **89302066.9**

(22) Date of filing: **01.03.89**

(51) Int. Cl.⁴: **G 02 B 6/44**

(30) Priority: **02.03.88 GB 8805017**
**05.08.88 GB 8818691**

(43) Date of publication of application:
**06.09.89 Bulletin 89/36**

(84) Designated Contracting States:
**AT BE CH DE ES FR GB GR IT LI LU NL SE**

(71) Applicant: **BRITISH TELECOMMUNICATIONS public limited company**
**81 Newgate Street**
**London EC1A 7AJ (GB)**

(72) Inventor: **Kerry, John**
**4 The Grove Martlesham Heath**
**Ipswich Suffolk IP5 7UZ (GB)**

**Keeble, Peter John**
**39 Bladen Drive Rushmere St. Andrew**
**Ipswich Suffolk IP4 5UE (GB)**

**Frost, Peter Lewis John**
**14 Copswood Close Kesgrave**
**Ipswich Suffolk IP5 7QF (GB)**

(74) Representative: **Roberts, Simon Christopher et al**
**BRITISH TELECOM Intellectual Property Unit 13th Floor**
**151, Gower Street**
**London, WC1E 6BA (GB)**

(54) **Fibre and splice organiser.**

(57) A splice tray comprises a planar base (1) on each side of which is a pair of formers (2, 3) for supporting turns of optical fibre extending from a splice. One former, (3) of each pair is moveable towards and away from the other former of the pair in order to adjust the length of fibre accommodated in a turn around the pair of formers. The tray may be provided with a terminal connector. In a preferred arrangement an array of trays is supported in a rack to constitute a patch panel. A similar arrangement may be used to store fibre on respective sides of connections other than splices. The arrangement facilitates non-disruptive handling.

Fig. 1.

EP 0 331 479 A1

**Description**

## FIBRE AND SPLICE ORGANISER

This invention relates to optical fibres and in particular to the organisation and storage of fibre extending from each side of fibre to fibre connections.

Within the context of this specification the expression connection includes splices and also connections made by other methods such as terminal connections.

Splice trays are used for housing optical fibre splices and are often arranged in arrays or racks, especially in exchanges. When a fibre splice is made between two fibre tails it is usual to have spare length in the fibres so that if necessary several splicing attempts may be made, either in the first instance or subsequently. In addition to this it is in general necessary for the fibre ends being joined to be positioned on a splicing bench and this requires additional fibre length to extend from the installation or splicing tray to a suitable location for the splicing bench. Once a splice has been completed the spare fibre is coiled around inside a splice storage tray. A typical splicing tray comprises a pair of fixed guides located in the tray around which the fibres are looped to prevent the fibres being bent through less than a minimum bend radius. It is usual practice for a plurality of splices to be stored in each splice tray.

The problems that arise with these currently used splice trays are that in order to access a particular splice it is necessary to remove some or all of the other splices and their fibre loops which risks entanglement, damage to other splices and is time consuming. Further, it is commonly found that the fixed guides do not enable exact take up of all the excess fibre, which can leave the spliced section or adjacent fibre relatively loose, unsupported and liable to entanglement with adjacent similarly loose spliced sections or fibre.

The present invention is directed towards alleviating the above mentioned problems.

Accordingly the present invention provides apparatus for storing coils of fibre associated with optical fibre connections, the apparatus comprising at least a pair of formers for retaining turns of optical fibre, at least one of the formers being moveable towards the other former to enable adjustment of the length of fibre accommodated in a turn around the formers.

The invention also provides a patch panel assembly comprising a plurality of coil organiser trays, each tray having two pairs of formers with at least one former of each pair being moveable towards and away from the other former of the pair to enable adjustment of the length of fibre accommodated in a turn around the pair of formers and means for supporting a connection so that the fibre extending from respective sides of the connection is accommodated by a respective pair of the formers.

The invention is now described by way of example with reference to the accompanying drawing in which:

Figure 1 is a schematic plan view of a first embodiment of the invention,

Figure 2 shows a plan view of a second embodiment of the invention;

Figure 3 shows a cross sectional view of the tray of Figure 2;

Figure 4 is an isometric view of a third embodiment of the invention, and

Figure 5 shows an array of splice trays forming a patch panel assembly.

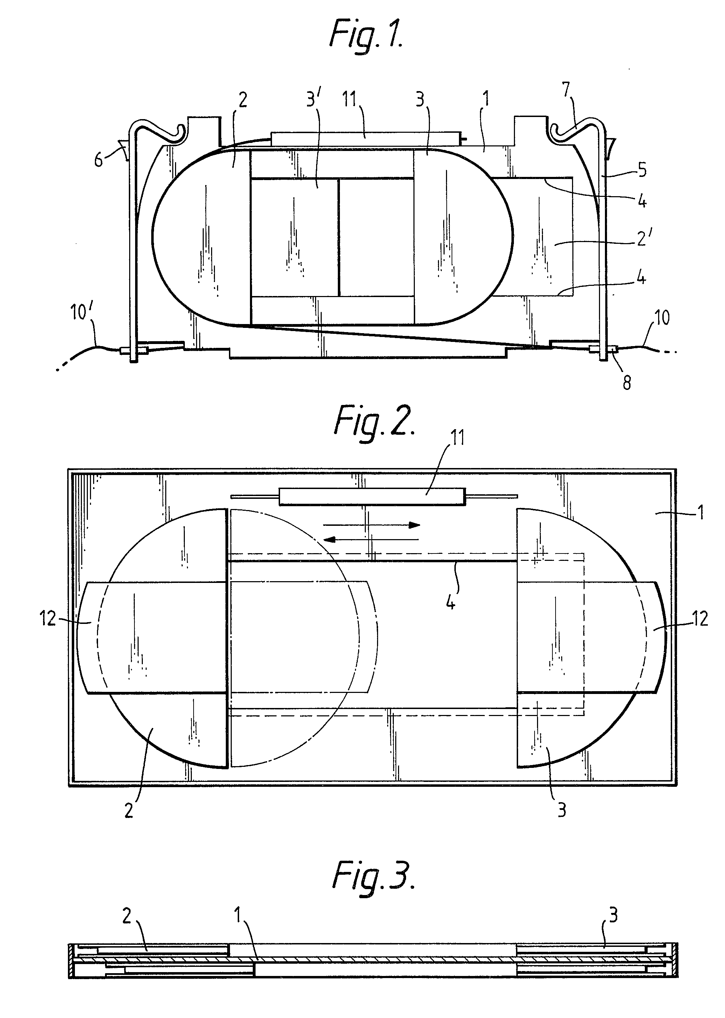

Referring to Figure 1, a preferred embodiment of a splice organiser according to the invention comprises a substantially flat tray having a base member 1 each side of which is provided with a fixed D shaped former 2 and a moveable D shaped former 3 which slides in a cut out channel defined by edges 4. In the drawing the back surfaces of the D shaped formers 2' and 3' of the reverse face of the base member 1 can be seen through the channel. At each of the shorter ends of the base member 1 a sprung arm 5 is provided, the sprung arms each having a catch 6. The arms and catches enable the assembly to be slid into and removably retained within a co-operative groove or recess in a racking or patch panel, the groove or recess having a co-operating stop member for engagement with the catch. Inward movement of the catches 6 for release from the co-operating stop member is enabled by inward movement of the curved ends 7 of the arms 5. At the other ends of the curved arms there are respective fibre guide tubes 8 through which the fibres that are to be spliced are threaded.

In the embodiment shown the excess fibre for the respective sides of the splice is stored on opposite sides of the organiser. As viewed in the drawing, a fibre 10 is threaded through guide tube 8 and stored on the side of the organiser that is upward in the illustration, whilst fibre 10' is stored on the reverse side. Having passed through the guide tube 8, the fibre 10 is wound around the D shaped formers 2 and 3, and the spacing of the formers is varied by sliding former 3 so that the splice lies along a selected long side of the organiser on which a splice retaining channel 11 is provided. The fibre 10' extending from the other side of the splice is similarly wound around formers 2' and 3', with former 3' being independently adjustable so also to exactly accommodate the excess length of fibre without the splice being in tension or the fibre buckling or being loose. A modification that is envisaged is that instead of each loop of fibre 10 being wound around its respective former 3 only one or the last few loops closest to the splice are wound around the moveable former with the remaining being wound between two fixed formers. It would also be possible to have two moveable formers on each side of the organiser.

With the splice organiser described the splice is maintained in its retaining channel 11 and variations in the length of excess fibre either present originally or by virtue of subsequent splicing can be accommodated by moving the formers 3, 3' so as to maintain the location of the splice. It is possible to accommodate substantially different lengths of fibre on each side of the splice.

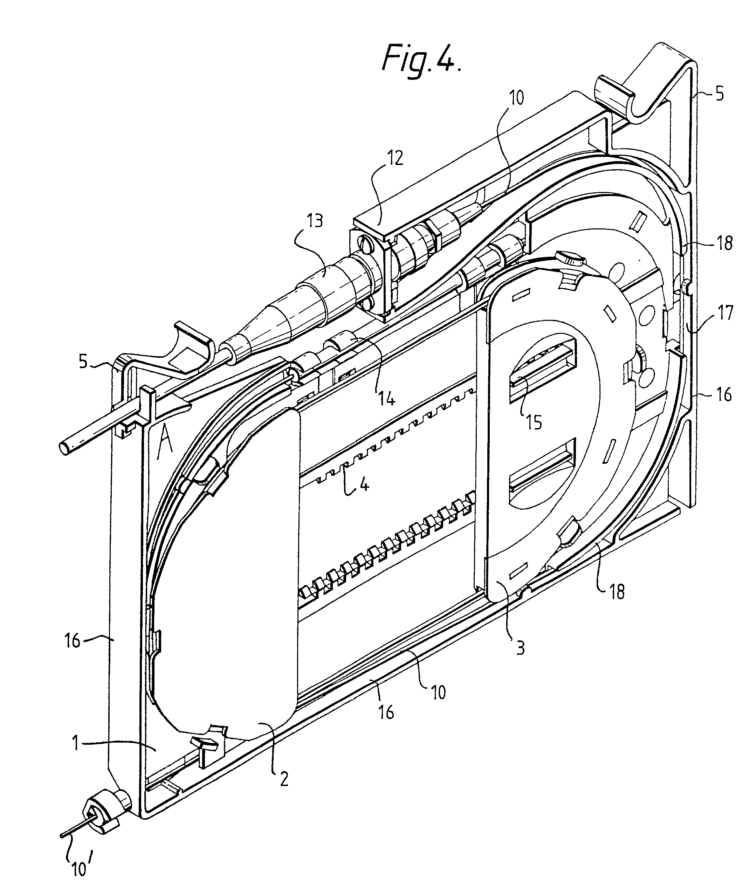

A plurality of splice organisers may be stacked in racks or in trays giving independent access to individual splices. Also the organisers may be provided with connector assemblies, as described later with reference to Figure 4.

Once positioned the moveable formers may be locked in position by a catch or other means, or alternatively they may lock by virtue of being a relatively close fit within the interengaging parts of the channel walls 4. The layout of the formers may also be altered to store the fibres side by side rather than back to back.

Figures 2 and 3 show an alternative embodiment of the invention. In this embodiment the splice retaining channel 11 is located away from the edge of the splice organiser, and the D formers are provided with a retaining flange 12 to prevent fibres from slipping from the D.

The position of closest approach of the former 3 to the fixed former 2 is shown in dotted outline. The radius of the curved parts of the former is chosen so that it conforms to or is greater than the minimum bend radius of the fibre.

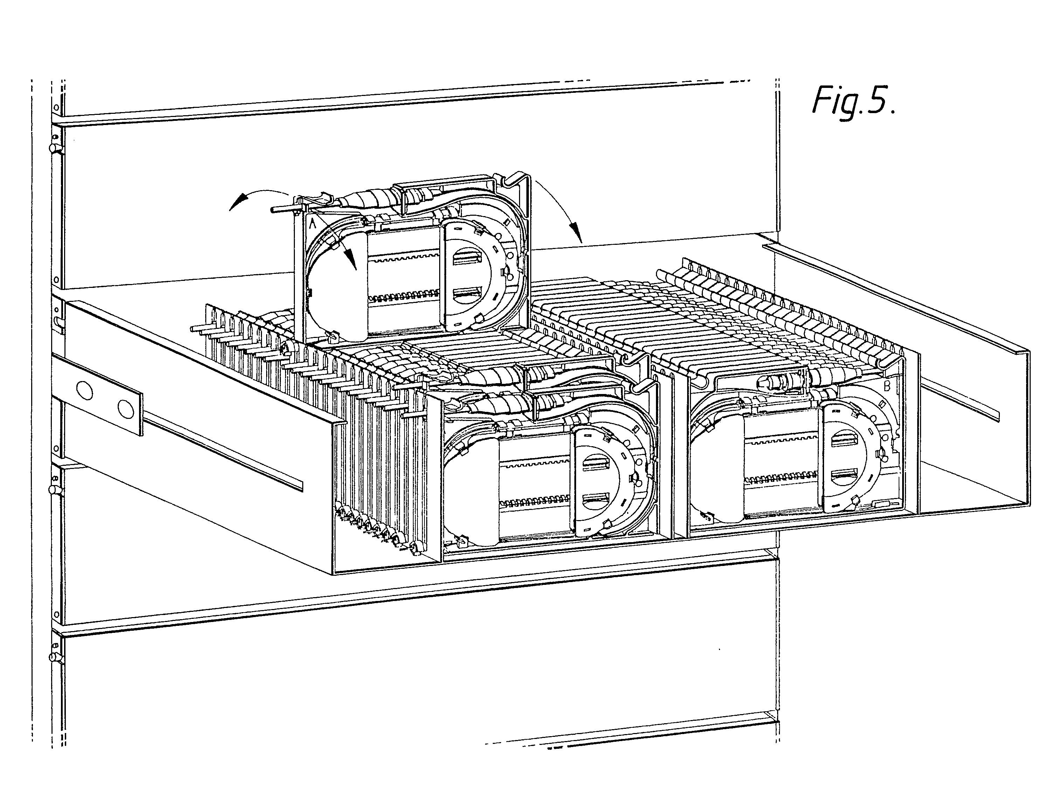

In another embodiment shown in Figure 4 the splice organiser is further provided with a support 12 for a terminal connector 13 thereby enabling an array of splice organisers to constitute the structure for a patch panel assembly as shown in Figure 5. In this embodiment the fibres 10 and 10′ enter on opposite long sides of the splice organiser and the splice itself is retained by clips 14 which form the splice retention channel. The edges 4 of the channel are serrated, the serrations being engaged by resilient clasps 15 to hold the moveable former 3 in position.

These clasps may be biased outwardly by a spring mechanism or, preferably, operate by virtue of the natural resilience of a plastics material from which the tray is made.

The base member 1 has an upstanding lip 16 that aids rigidity of the structure and provides lateral protection for the fibre loops. At the end of the splice organiser adjacent the moveable former 3 a fibre channel 17 is defined between the lip 16 and a wall member, and this provides support for the fibre 10 from the connector on its first turn: this is necessary because the fibre cannot be permitted to bend in sharply towards the moveable former, especially if the latter is disposed close to the fixed former. The fibre 10 then loops around the fixed D former, then around the moveable former and after the required number of turns the spliced section is positioned in the clips 15. The position of the former 3 is adjusted to ensure that the final turn of fibre is neither too taut nor too slack whilst enabling correct location of the splice.

The other side of the splice tray corresponds, but in this instance there is no need to provide a guide channel 17 because the fibre 10 passes straight along the long side of the tray before turning around the fixed former at the end of the splice tray opposite to its entry end. It is envisaged that both the moveable formers could be located at the same end of the splice tray. Support channels for the fibres are provided, as required, where the fibre could otherwise turn sharply onto or off the moveable formers.

Referring to Figure 5 it will be realised that the advantage of having the fibres entering from the same direction on opposite long sides of the splice tray is that it enables compact assemblies to be formed in dual rows with the fibres accessible on the outward sides.

The embodiments described so far have all accommodated fibre on opposite sides of a splice. A modification that is also envisaged is to use a fibre organiser with moveable formers to accommodate fibre extending from opposite sides of other connectors, such as a terminal connector, which may be supported on the organiser, for example as the terminal connector 13 in Figure 4. However in this instance the respective sides of the organiser are used to store the fibre extending from opposite sides of the terminal connector rather than the terminal connector being in line with a splice. Such an arrangement facilitates non disruptive testing of the lines on each side of the terminal connector, and may enable elimination of splices within a patch panel assembly. Such organisers according to the invention are not restricted to utilisation in patch panel locations but are of more general applicability.

## Claims

1. Apparatus for storing coils of fibre associated with optical fibre connections, the apparatus comprising at least a pair of formers for retaining turns of optical fibre, at least one of the formers being moveable towards the other former to enable adjustment of the length of fibre accommodated in a turn around the formers.

2. Apparatus according to Claim 1 in which two pairs of formers are provided on a common base, and coils of fibre on each side of a connection are wound around a respective pair of said pairs of formers.

3. Apparatus according to Claim 2 in which the base is substantially planar and a pair of formers is provided on each face of the base.

4. Apparatus according to any preceding claim further comprising means for engaging with a supporting member.

5. Apparatus according to Claim 4 in which the means comprises at least one resilient catch.

6. Apparatus according to any preceding claim in which the connection comprises a splice.

7. Apparatus according to any preceding claim further comprising means for supporting a splice.

8. Apparatus according to any preceding claim further comprising means for supporting a terminal connector assembly.

9. A patch panel assembly comprising a plurality of coil organiser trays, each tray having two pairs of formers with at least one former of each pair being moveable towards and away from the other former of the pair to enable adjustment of the length of fibre accommodated in a turn around the pair of formers and means for supporting a connection so that the fibre extending from respective sides of the connection is accommodated by a respective pair of the formers.

10. A patch panel assembly according to claim 9 in which the connection comprises a splice.

11. A patch panel assembly according to claim 9 or claim 10 including means for supporting a splice.

12. A patch panel assembly according to Claim 7 in which each coil organiser tray is further provided with means for supporting a terminal connector.

13. Apparatus substantially as hereinbefore described with reference to the accompanying drawings.

*Fig.1.*

*Fig.2.*

*Fig.3.*

Fig.4.

Fig.5.

EP 0 331 479 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 587 127 (VALLEIX)<br>* Figure 1; page 6, lines 21-35; page 7, lines 1-21; page 13, lines 30-35; page 14, lines 1-30 * | 1,9 | G 02 B 6/44 |
| A | | 3,6,10 | |
| X | PATENT ABSTRACTS OF JAPAN, vol. 9, no. 173 (E-329)[1896], 18th July 1985; & JP-A-60 46 145 (FURUKAWA DENKI KAGYO K.K.) 12-03-1985<br>* Abstract * | 1,9 | |
| A | | 6,10 | |
| X | DE-A-3 412 159 (SCHIEDERWERK G.S. KG FABRIK)<br>* Figures 1,2; page 7, lines 17-25; page 8, lines 1-32 * | 1 | |
| A | | 3 | |
| A | DE-A-2 914 217 (LICENTIA)<br>* Figures 2,3; page 5, lines 18-36; page 6, lines 1-35 * | 1,4-7 | TECHNICAL FIELDS SEARCHED (Int. Cl.4) |
| A | PATENT ABSTRACTS OF JAPAN, vol. 10, no. 15 (P-422)[2072], 21st January 1986; & JP-A-60 169 810 (FURUKAWA DENKI KOGYO K.K.) 03-09-1985<br>* Abstract * | 1,8 | G 02 B 6/00 |
| A | EP-A-0 215 668 (ADC TELECOM)<br>* Figures 4,11,12; page 12, lines 32-34; page 13, lines 1-34; page 14, lines 1-6; page 15, line 34; page 16, lines 1-11 * | 1,6-12 | |

The present search report has been drawn up for all claims

| Place of search | Date of completion of the search | Examiner |
|---|---|---|
| THE HAGUE | 08-06-1989 | MATHYSSEK K. |